# EUROPEAN PATENT APPLICATION

(11) **EP 4 506 113 A1**
(43) Date of publication of application: **12.02.2025**
(21) Application number: 23784849.4
(22) Date of filing: 10.02.2023
(51) Int. Cl.: B25J 9/16, B25J 5/00, B25J 13/08, G05D 1/02

(54) **MOBILE ROBOT AND CONTROL METHOD THEREFOR**

(30) Priority: 06.04.2022 KR 20220042868
(71) Applicant: LG Electronics Inc., Yeongdeungpo-gu Seoul 07336 (KR)
(72) Inventor: KIM, Junghwan, Seoul 08592 (KR); BAEK, Gwanryong, Seoul 08592 (KR); LEE, Minho, Seoul 08592 (KR)
(74) Representative: Ter Meer Steinmeister & Partner
(86) International application number: PCT/KR2023/001981
(87) International publication number: WO 2023/195621

(57) **Abstract**

Provided in an embodiment of the present invention for accomplishing the objective is a mobile robot control method comprising the steps of: collecting traveling state information while traveling in a traveling zone according to a basic map of the traveling zone; analyzing the traveling state information so as to set, as a dangerous region, a position where a plurality of abnormal situations occur, thereby creating a prohibited region map in the traveling zone; overlapping the predetermined number of prohibited region maps so as to calculate prohibited region candidates, if the prohibited region map is created to satisfy a predetermined number; and reflecting at least one of the prohibited region candidates on the basic map as a prohibited region so as to update the basic map to be used for subsequent traveling in the traveling zone. Therefore, various abnormal situations that cannot be sensed by a sensor for a space in which traveling is necessary can be recognized, and the type of situation, from among restriction, wandering and collision, can be accurately recognized according to various determination schemes and can be handled according thereto.

## Description

### Technical Field

The present disclosure relates to a mobile robot, and more particularly to, sensing and control technology of a mobile robot for generating a traveling map.

### Background Art

The application fields of robots have further expanded, medical robots, aerospace robots, and the like have been developed, and household robots that can be used in ordinary homes are being manufactured. Among these robots, a robot capable of travelling autonomously is referred to as a mobile robot.

A representative example of the household robot is a mobile robot.

Various technologies are known for detecting an environment and a user around a mobile robot through various sensors provided in the mobile robot. In addition, technologies are known to allow a mobile robot to learn and map an area to be cleaned by itself and to determine its current position on a map. Mobile robots are known that travel and clean a cleaning area (i.e., an area to be cleaned) in a preset manner.

A map of a traveling area should be accurately generated in order for a mobile robot to perform a predetermined task, such as cleaning, and the current position of the mobile robot on the map should be accurately determined in order for the mobile robot to move to a specific point in the traveling area.

In addition, it is necessary to identify an area on the map that is difficult for the mobile robot to travel so as to allow the mobile robot to travel by avoiding the area or perform a response motion.

For this purpose, a related art (Korean Patent Publication No. 10-2015-0014237), discloses a mobile robot capable of determining a restricted area upon receiving user's motion or voice instructions.

However, when a user directly sets a restricted area, an error may occur in the setting because the restricted area is set based on the user rather than based on the mobile robot.

Meanwhile, in the case of a related art (Korean Patent Publication No. 10-2018-0160300), discloses a robot cleaner that can extract an area where the robot cleaner does not move in a straight line, which is the normal traveling direction, and a response motion such as an avoidance motion occurs and reflect it on a map.

In other words, it is disclosed that when the robot cleaner knows information about a cleaning obstruction area in the map, the robot cleaner reflects this information in traveling to avoid it and uses it in the next time traveling.

In the case of the relater art, the robot cleaner is designed to avoid only obstacles of a certain height based on the measured value of a distance sensor, or obstacles that are pre-recognized object, such that the robot cleaner performs a response motion based on this.

However, in a general cleaning environment, there are situations difficult to detect by a sensor detection, due to the properties of an object, and atypical objects, which are difficult to define as dangerous obstacles, are not easy to be recognized through prior learning, thereby causing problems such as collisions and stalling.

In addition, if a robot cleaner is unable to respond appropriately to a situation, such as wandering around for a long time in a complex space, it may cause inconvenience to customers, such as damage to furniture and constant stalling.

### [Related Art Documents]

(Patent Document 1) Korean Patent Publication No. 10-2015-0014237A (2015.02.06.)
(Patent Document 2) Korean Patent Publication No. 2018-0160300A (2020.06.20.)

### Disclosure

### Technical Problem

In order to solve the aforementioned problems, an aspect of the present disclosure is to provide a control method for recognizing various abnormal situations, which cannot be detected by a sensor, for a space that requires traveling (or cleaning) and responding accordingly.

Another aspect of the present disclosure is to provide a control method for improving the accuracy of identifying a situation by clustering points where an abnormal situation occurs during traveling in a large traveling space, and determining the probability of the abnormal situation based on multiple times of traveling.

Yet another aspect of the present disclosure is to define an area with a high probability of an abnormal situation as an obstruction area and provides it to a user, and to define an area that reflects a user's opinion by setting only the area selected as an obstruction area according to feedback from the user.

### Technical Solution

To achieve the aforementioned aspects, according to an embodiment of the present disclosure, there is provided a mobile robot including: a traveling unit to allow a body to move in a traveling area; and a controller configured to: analyze traveling state information while traveling in the traveling area according to a base map for the traveling area to set a risk area where a plurality of abnormal situations occur; and update the base map by reflecting the risk area in the base map to be used for subsequent traveling in the traveling area.

The controller may be configured to create a restricted area map, where the risk area for the traveling area is set, at each of a plurality of times of traveling in the traveling area.

By analyzing the traveling state information, the controller may be configured to determine whether the abnormal situation corresponds to one of stalling, wandering, or a collision to record a location of the risk area and a type of the abnormal situation in the restricted area map.

The traveling unit of the mobile robot may include a plurality of wheels to allow the body to move. The abnormal situation may be determined based on the traveling state information on the wheels.

In case that the wheel is in an error state, or the mobile robot does not travel for a predetermined time, the controller may be configured to determine the abnormal situation as stalling.

In case that a distance traveled by the mobile robot for a predetermined time is less than or equal to a predetermined distance, or a rotation current value of the wheel is out of a threshold range, the controller may be configured to determine the abnormal situation as wandering.

The mobile robot may further include a bumper sensor. The controller may be configured to determine whether a collision occurs based on a signal detected by the bumper sensor.

By overlapping all of the restricted area maps for the traveling area, the controller may be configured to select at least one of overlapping risk areas as a restricted area candidate.

The controller may be configured to assign a weight to each risk area; and sum the weights of the risk area overlapping with respect to the restricted area candidate.

In case that the total combined weight of the risk area is greater than or equal to a threshold value, the controller may be configured to select the risk area as the restricted area candidate.

The mobile robot may further include a storage unit to store the restricted area map.

In case that the number of restricted area maps stored in the storage unit satisfies a predetermined number, the controller may be configured to calculate the restricted area map candidate by overlapping the predetermined number of restricted area maps.

The controller may be configured to assign a different weight to each of the abnormal situations.

The controller may be configured to: transmit information regarding the restricted area candidates to an external device; and update the base map by recording a selected restricted area candidate from among the restricted area candidates as a restricted area in the base map.

The controller may be configured to: display the risk area as a cell of a predetermined size with respect to a location point where the abnormal situation has occurred; and define an area where the risk areas overlap in a plurality of restricted area maps as the restricted area candidate.

The overlap area may be extended to a predetermined size to be set as the restricted area candidate.

According to another embodiment, there is provided a method for controlling a mobile robot, the method including: collecting traveling state information while traveling in a traveling area according to a base map for the traveling area; determining, based on analyzing the traveling state information, a location where a plurality of abnormal situations occur as a risk area to create a restricted area map for the traveling area; when the restricted area map is created to satisfy a predetermined number, calculating restricted area candidates by overlapping the predetermined number of restricted area maps; and reflecting, in the based map, at least one of the restricted area candidates as a restricted area and updating the base map to be used for subsequent traveling in the traveling area.

The calculating restricted area candidates may include assigning a weight to each risk area for each restricted area map and summing the weights of the risk area overlapping with respect to the restricted area candidate; and based on the total combined weight of the risk area being greater than or equal to a threshold value, selecting the risk area as the restricted area candidate.

A different weight may be assigned to each of the abnormal situations.

The method may further include: transmitting information regarding the restricted area candidates to an external device; and receiving selection information of at least one of the restricted area candidates from the external device. The updating the base map may include updating the base map by recording, in the base map, a selected restricted area candidate as the restricted area.

### Advantageous Effects

The present disclosure has one or more of the following effects.

According to the present disclosure, it is possible to recognize various abnormal situations, which cannot be detected by a sensor, in a space where traveling is required, and to accurately recognize whether it is stalling, wandering, or a collision based on various determination methods to respond accordingly.

In addition, it is possible improve the accuracy of identifying a situation by clustering points where an abnormal situation occurs during traveling in a large traveling space, and determining the probability of the abnormal situation based on multiple times of traveling.

Further, according to the present disclosure, it is possible to define an area with a high probability of an abnormal situation as an obstruction area and provides it to a user, and to define an area that reflects a user's opinion by setting only the area selected as an obstruction area according to feedback from the user, thereby increasing the accuracy of the obstruction area and enabling mapping by reflecting the user's opinion.

The effects of the present disclosure are not limited to the effects described above, and other effects not mentioned will be clearly understood by those skilled in the art from the claims.

### Brief Description of Drawings

FIG. 1 is a perspective view illustrating a mobile robot and a charging station for charging the mobile robot, according to an embodiment of the present disclosure.
FIG. 2 is a top elevational view of the mobile robot of FIG. 1.
FIG. 3 is a front elevational view of the mobile robot of FIG. 1.
FIG. 4 is a bottom elevational view of the mobile robot of FIG. 1.
FIG. 5 an example of a mobile robot according to another embodiment of the disclosure.
FIG. 6 is a block diagram illustrating a control relationship between main components of the mobile robot of FIG. 1 or FIG. 5.
FIG. 7 is a flowchart illustrating a process for designating a restricted area of a mobile robot according to an embodiment of the present disclosure.
FIG. 8 is a flowchart illustrating a process for detecting an abnormal situation of FIG. 7.
FIGS. 9A and 9B illustrate an example of determining wandering of a mobile robot according to the flowchart of FIG. 8.
FIGS. 10A and 10B illustrate another example of determining wandering of a mobile robot according to the flowchart of FIG. 8.
FIGS. 11A and 11B illustrate clustering determination of a mobile robot according to the flowchart of FIG. 8.
FIG. 12 is a flowchart illustrating a process of selecting a restricted area candidate of FIG. 7.
FIG. 13 illustrates the accumulation of restricted areas of FIG. 12.
FIGS. 14A, 14B views illustrating a process of determining a size of a restricted area candidate.
FIG. 15 illustrates a restricted area setting from a user terminal of FIG. 7.
FIG. 16 illustrates setting a confirmed restricted area on a map.

### Mode for the Invention

In the linguistically/mathematically expressed size comparison throughout this document, the terms "less than or equal to (smaller than or equal to)" and "less than (below)" can be readily substituted from the point of view of ordinary expert, the terms "greater than or equal to (more than or equal to)" and "greater than (above)" can be readily substituted from the point of view of ordinary expert, and it is obvious that such a substitution does not incur a problem in exhibiting its effect.

A mobile robot 100 of the present disclosure refers to a robot capable of moving on its own using wheels or the like, and may be a domestic robot, a robot cleaner, or the like.

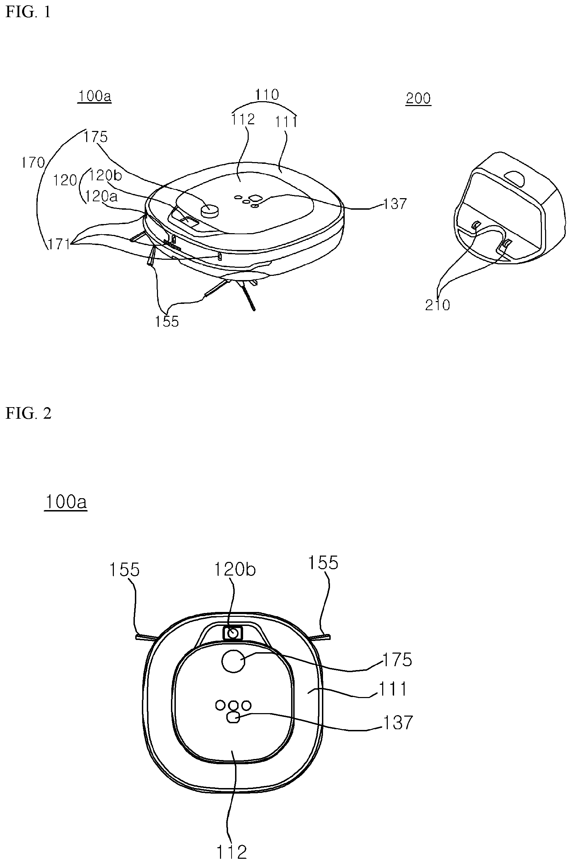

FIGS. 1 to 4 illustrate the exterior of a mobile robot and a charging station for charging the mobile robot, according to an embodiment of the present disclosure.

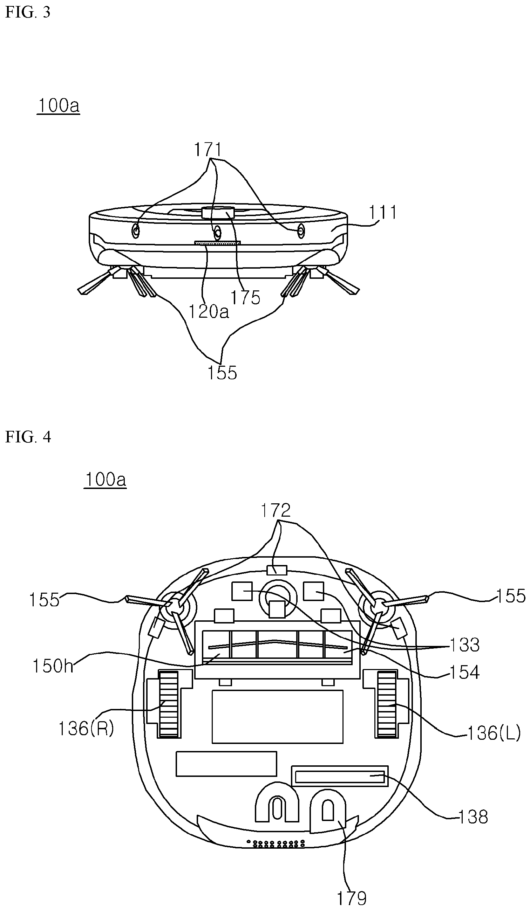

FIG. 1 is a perspective view illustrating a mobile robot and a charging station for charging the mobile robot, according to an embodiment of the present disclosure. FIG. 2 is a top elevational view of the mobile robot of FIG. 1, FIG. 3 is a front elevational view of the mobile robot of FIG. 1, and FIG. 4 is a bottom elevational view of the mobile robot of FIG. 1.

The mobile robot 100 includes a body 110. Herein, as to defining each part of the body 11, a part facing a ceiling in a travel area is defined as a top part (see FIG. 2), a part facing a floor in the travel area is defined as a bottom part (see FIG. 4), of the circumference of the body 110 between the top part and the bottom part, a part facing a traveling direction is defined as a front part (see FIG. 3), and a part facing an opposite direction to the front part of the body 110 is defined as a rear part. The body 110 may include a case 111 that defines a space in which various components constituting the mobile robot 100 are accommodated.

The mobile robot 100 may include, for example, at least one driving wheel 136 to allow the body 110 to move. The driving wheel 136 may be driven and rotated by, for example, at least one motor (not shown) connected to the driving wheel 136.

For example, the driving wheel 136 may be provided on each of the left side and the right side of the body 110, and these driving wheels 136 will be hereinafter referred to as a "left wheel 136(L)" and a "right wheel 136(R)", respectively.

The left wheel 136(L) and the right wheel 136(R) may be driven by a single drive motor. However, as necessary, a left wheel drive motor to cause the left wheel 136 L to be driven and a right wheel drive motor to cause the right wheel 136(R) to be driven may be provided. The traveling direction of the body 110 may be changed to the left or right by making a difference in rotational speed between the left wheel 136(L) and the right wheel 136(R).

The mobile robot 100 may include, for example, a suction unit 330 for sucking foreign matter or dust, brushes 154 and 155 for brushing, a dust bin for storing collected foreign matter, a mop unit for mopping, and the like.

For example, a suction port 150h through which air is sucked may be formed on the bottom part of the body 110, and a suction device configured to provide a suction force to allow air to be sucked through the suction port 150h and a dust bin to collect dust sucked together with air through the suction port 150h may be provided in the body 110.

The mobile robot 100 may include, for example, the case 111 that defines a space in which various components constituting the mobile robot 100 are accommodated. An opening (not shown) for insertion and removal of the dust bin may be formed in the case 111, and a dust bin cover 112 to open and close the opening may be provided to be rotatable relative to the case 111.

The mobile robot 100 may include, for example, a roll-type main brush 154 having bristles exposed through the suction port 150h, and an auxiliary brush 155 positioned at the front bottom part of the body 110 and configured as a brush consisting of a plurality of radially extending wings. Dust may be separated from a floor in a traveling area by rotation of the brushes 154 and 155, and the dust separated from the floor may be sucked through the suction port 150h and then be introduced into the dust bin through the suction unit 330.

Air and dust may be separated from each other while passing through a filter and a cyclone of the dust bin. The separated dust may be collected in the dust bin, and the air may be discharged from the dust bin and then pass through an exhaust passage (not shown) in the body 110 to be discharged to the outside through an exhaust port (not shown).

A battery 138 may supply power not only required for the drive motor but also for the overall operation of the mobile robot 100. When the battery 138 is running out of charge, the mobile robot 100 may travel to return to a charging station 200 for charging, and during the return travel, the mobile robot 100 may autonomously detect a location of the charging station 200.

The charging station 200 may include, for example, a signal transmission unit (not shown) to transmit a predetermined return signal. The return signal may include, but is not limited to, an ultrasonic signal or an infrared signal.

The mobile robot 100 may include, for example, a signal detection unit (not shown) to receive the return signal.

For example, the signal detection unit may include an infrared sensor to detect an infrared signal, so as to receive the infrared signal transmitted from the signal transmission unit of the charging station 200. Here, the mobile robot 100 may move to the location of the charging station 200 according to the infrared signal transmitted from the charging station 200 and dock with the charging station 200. Upon docking, a charging terminal 133 of the mobile robot 100 and a charging terminal 210 of the charging station 200 may come into contact with each other, thereby charging the battery 138.

The mobile robot 100 may include a component that detects information inside/outside the mobile robot 100.

The mobile robot 100 may include, for example, a camera 120 to acquire image information regarding a traveling area.

For example, the mobile robot 100 may include a front camera 120a to acquire an image in front of the body 110.

For example, the mobile robot 100 may include an upper camera 120b provided on the top part of the body 110 to acquire an image of the ceiling in the traveling area.

For example, the mobile robot 100 may further include a lower camera 179 provided on the bottom part of the body 110 to acquire an image of the floor.

Meanwhile, the number of cameras 120 provided in the mobile robot 100, the position at which the cameras 120 are disposed, and the image capture range are not necessarily limited, and the cameras 120 may be disposed at various positions to obtain image information on the traveling area.

For example, the mobile robot 100 may include a camera (not shown) disposed to be inclined with respect to one surface of the body 110 so as to photograph the front and the top together.

For example, the mobile robot 100 may be provided with a plurality of front cameras 120a and/or upper cameras 120b, and may be provided with a plurality of cameras configured to photograph the front and the top together.

In some embodiments, the cameras 120 may be installed on some portions (e.g., the front, the rear, and the bottom) of the mobile robot 100 to continuously acquire images during traveling or cleaning. For the image capture efficiency, a plurality of cameras 120 may be installed on each portion, and images captured by the cameras 120 may be used to recognize a type of substance, such as dust, hair, a floor, or the like, present in the space, to check whether cleaning has been done, or to check a cleaning time.

The mobile robot 100 may include various sensing units 170. Specifically, the sensing unit 170 may include a light detection and ranging (LiDAR) sensor 175 that acquires information on geometry outside the body 110 using a laser.

The LiDAR sensor 175 may output a laser and receive the laser reflected from an object, thereby obtaining information, such as a distance to the object from which the laser is reflected, a location direction, a material, or the like, and acquiring geometry information of the traveling area. The mobile robot 100 may acquire 360-degree geometry information based on the information acquired through the LiDAR sensor 175.

The sensing unit 170 may also include sensors 171, 172, and 179 to sense various data regarding the operation and state of the mobile robot 100.

The sensing unit 170 may include an obstacle detection sensor 171 that detects an obstacle ahead, a cliff detection sensor 172 that detects the presence of a cliff on the floor in the traveling area, and the like.

The mobile robot 100 may include a manipulation unit 137 for inputting various commands such as power on/off of the mobile robot 100, and various control commands required for the overall operation the mobile robot 100 may be received through the manipulation unit 137.

The mobile robot 100 may include an output unit (not shown) to display scheduled cleaning information, battery status (or level), operation mode, operation status, error state, etc.

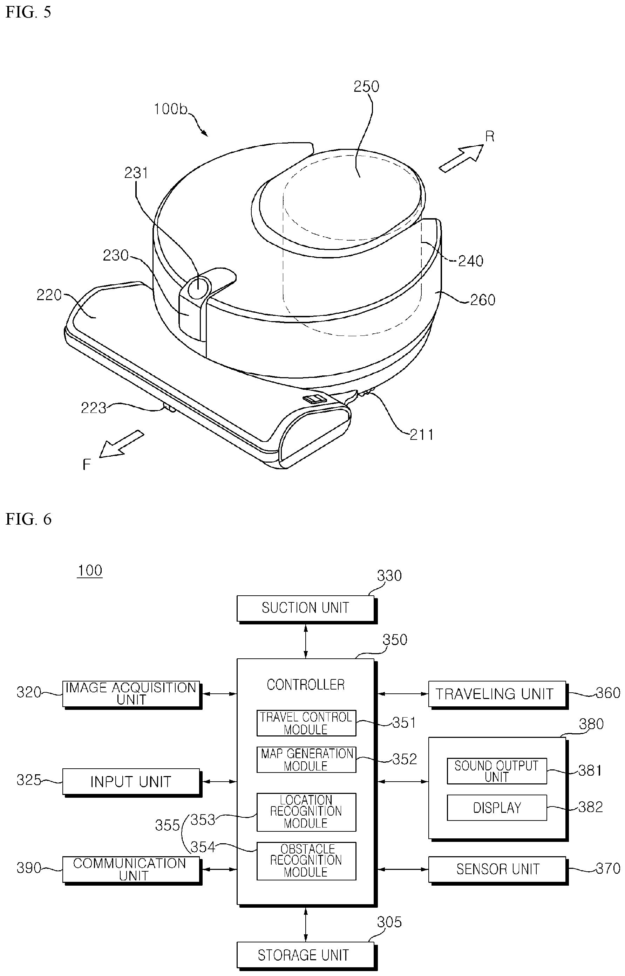

FIG. 5 is a view illustrating an example of a mobile robot according to another embodiment of the present disclosure.

A mobile robot 100b illustrated in FIG. 5 may have the same or similar configurations as the mobile robot 100 illustrated in FIGS. 1 to 4.

The mobile robot 100b may include a cleaner body 260, a cleaning unit 220, a sensing unit 230, and a dust bin 240. Various components including a controller (not shown) for controlling the mobile robot 100b are embedded in or mounted on the cleaner body 260. In addition, the cleaner body 260 is provided with a wheel unit 211 to allow the mobile robot 100b to travel. The mobile robot 100b may be moved or rotated forward, rearward, leftward or rightward by the wheel unit 211.

The wheel unit 211 includes a main wheel and a sub wheel.

The main wheel is provided on each of both sides of the cleaner body 260, and is configured to be rotatable in one direction or another direction according to a control signal of the controller. The respective main wheels may be configured to be driven independently of each other.

The sub wheel is configured to support the cleaner body 260 along with the main wheel and assist the traveling of the mobile robot 100b by the main wheel. The sub wheel may also be provided on the cleaning unit 220 described later.

The controller controls the operation of the wheel unit 211, which allows the mobile robot 100b to autonomously travel on the floor.

Meanwhile, a battery (not shown) that supplies power to the mobile robot 100b is mounted on the cleaner body 260. The battery may be configured to be chargeable, and may be detachably attached to the bottom part of the cleaner body 260.

The cleaning unit 220 is disposed to protrude from one side of the cleaner body 260, as illustrated in FIG. 5, so as to suck air containing dust or perform mopping. The one side may be a side where the cleaner body 260 travels in a forward direction F, namely, a front side of the cleaner body 260. In this drawing, it is illustrated that the cleaning unit 220 has a shape protruding from one side of the cleaner body 260 to the front and both left and right sides. In detail, a front end portion of the cleaning unit 220 is disposed at a position spaced forward from the one side of the cleaner body 260, and left and right end portions of the cleaning unit 220 are disposed at positions respectively spaced leftward and rightward from the one side of the cleaner body 260.

As the cleaner body 260 is formed in a circular shape, and both sides of a rear end portion of the cleaning unit 220 respectively protrude to the left and right sides from the cleaner body 260, an empty space, namely, a gap may be formed between the cleaner body 260 and the cleaning unit 220.

The empty space, which is a space between the left and right end portions of the cleaner body 260 and the left and right end portions of the cleaning unit 220, has a shape recessed into the mobile robot 100b.

When an obstacle is caught or stuck in the empty space, movement of the mobile robot 100b may be hindered by the obstacle. In order to prevent this, a cover member may be provided to cover at least a portion of the empty space.

The cover member is disposed to fill at least a portion of the empty space between the cleaner body 260 and the cleaning unit 220, thereby achieving a structure capable of preventing an obstacle from being caught in the empty space or easily removing an obstacle caught in the empty space.

The cleaning unit 220 may be detachably coupled to the cleaner body 260. When the cleaning unit 220 is detached from the cleaner body 260, a mop module (not shown) may be detachably coupled to the cleaner body 260 in place of the detached cleaning unit 220.

Thus, a user can attach the cleaning unit 220 to the cleaner body 260 when removing dust on the floor is necessary, and can attach the mop module to the cleaner body 260 when mopping the floor is necessary. When the cleaning unit 220 is coupled to the cleaner body 260, the coupling may be guided by the cover member 129 described above.

The cleaning unit 220 may be provided with a castor 223. The caster 223 is configured to assist the traveling of the mobile robot 100b and support the mobile robot 100b.

The sensing unit 230 is disposed at the cleaner body 260. As shown, the sensing unit 230 may be disposed on one side of the cleaner body 260 where the cleaning unit 220 is located, namely, on the front side of the cleaner body 260.

The sensing unit 230 may be disposed to overlap the cleaning unit 220 in an up-and-down direction of the cleaner body 260. The sensing unit 230 is disposed at an upper portion of the cleaning unit 220 to sense an obstacle or terrain ahead to prevent the cleaning unit 220, which is located at the forefront of the mobile robot 100b, from colliding with the obstacle.

The sensing unit 230 may be configured to additionally perform another sensing function in addition to this sensing function.

As an example, the sensing unit 230 may include a camera 231 for acquiring surrounding images. The camera 231 may include a lens and an image sensor. In addition, the camera 231 may convert an image around the cleaner body 260 into an electrical signal that can be processed by the controller, and may transmit, for example, an electrical signal corresponding to a top image to the controller. The electrical signal corresponding to the top image may be used by the controller to detect the position of the cleaner body 260.

In addition, the sensing unit 230 may detect an obstacle such as a wall, furniture, or a cliff on a traveling surface or traveling path of the mobile robot 100b. Also, the sensing unit 230 may detect the presence of a docking device that performs battery charging.

Further, the sensing unit 230 may detect ceiling information to map a traveling area or a cleaning area of the mobile robot 100b.

The dust bin 240 for separating and collecting dust from sucked air is detachably coupled to the cleaner body 260.

In addition, the dust bin 240 is provided with a dust bin cover 250 to cover the dust bin 240. In one embodiment, the dust bin cover 250 may be hinged to the cleaner body 260 so as to be rotatable. The dust bin cover 250 may be fixed to the dust bin 240 or the cleaner body 260 so as to keep an upper surface of the dust bin 240 covered. While the dust bin cover 250 covers the upper surface of the dust bin 240, the dust bin cover 250 may prevent the dust bin 240 from being separated from the cleaner body 260. A portion of the dust bin 240 may be accommodated in a dust bin accommodating part, and another portion of the dust bin 240 may protrude toward the rear of the cleaner body 260 (i.e., a reverse direction R opposite to the forward direction F).

The dust bin 240 has an inlet through which air containing dust is introduced and an outlet through which air separated from dust is discharged. When the dust bin 240 is mounted on the cleaner body 260, the inlet and outlet communicate with each other via an opening 155 formed in an inner wall of the cleaner body 260. Accordingly, an intake passage and an exhaust passage may be formed in the cleaner body 260.

According to this connection, air containing dust introduced through the cleaning unit 220 flows into the dust bin 240 through the intake passage in the cleaner body 260, and the air is separated from the dust while passing through a filter and a cyclone of the dust bin 240. Then, the dust is collected in the dust bin 240, and the air is discharged from the dust bin 240 and then passes through the exhaust passage in the cleaner body 260 to be discharged to the outside through an exhaust port.

FIG. 6 is a block diagram illustrating a control relationship between main components of a mobile robot (100a, 100b) according to an embodiment of the present disclosure.

Referring to FIG. 6, the mobile robot 100a, 100b may include a storage unit 305, an image acquisition unit 320, an input unit 325, a suction unit 330, a controller 350, a traveling unit 360, a sensor unit 370, an output unit 380, and/or a communication unit 390. Hereinafter, the mobile robots 100a and 100b will be collectively described as a mobile robot 100, and other components will be described based on the mobile robot 100a of FIG. 1.

The storage unit 305 may store various information necessary for the control of the mobile robot 100.

The storage unit 305 may include a volatile or non-volatile recording medium. The recording medium, which is used to store data that can be read by a microprocessor, is not limited to a particular type or implementation method.

The storage unit 305 may store a map for a traveling area. The map stored in the storage unit 305 may be input from an external terminal, a server, or the like that can exchange information with the mobile robot 100 through wired or wireless communication, or may be created by the mobile robot 100 through learning by itself.

The storage unit 305 may store data regarding a sub-area. Herein, the sub-area may refer to a divided zone having a predetermined distance or a predetermined surface area in the traveling area. The data regarding the sub-area may include LiDAR detection data obtained while traveling in the corresponding sub-area, information on each node for the corresponding LiDAR detection data, information on the direction of movement direction in each node, and the like.

The storage unit 305 may store various map information.

The map may display the locations of rooms in the traveling area. In addition, the current position of the mobile robot 100 may be displayed on the map, and the current position of the mobile robot 100 on the map may be updated during traveling.

The storage unit 305 may store cleaning history information. Such cleaning history information may be generated each time cleaning is performed.

The map for the traveling area stored in the storage unit 305 may be, for example, a navigation map used for traveling during cleaning, a simultaneous localization and mapping (SLAM) map used for location recognition, a learning map used for learning cleaning by storing corresponding information in the case of a collision with an obstacle or the like, a global topological map used for global localization recognition, a cell data-based grid map, an obstacle recognition map in which information regarding a recognized obstacle is recorded, etc.

Meanwhile, maps may be stored and managed in the storage unit 305 according to the purpose of use, but the maps may not be clearly classified by purposes of use. For example, a plurality of pieces of information may be stored in one map to be used for at least two or more purposes.

The image acquisition unit 320 may acquire an image around the mobile robot 100. The image acquisition unit 320 may include at least one camera (e.g., the camera 120 of FIG. 1).

The image acquisition unit 320 may include, for example, a digital camera. The digital camera may include an image sensor (e.g., a CMOS image sensor) that includes at least one optical lens and a plurality of photodiodes (e.g., pixels) on which an image in formed by light passing through the optical lens, and a digital signal processor (DSP) that configures an image based on a signal output from the photodiodes. The DSP may create, for example, a still image as well as a moving image composed of frames of still images.

The image acquisition unit 320 may photograph a situation of an obstacle or a cleaning area ahead in a traveling direction of the mobile robot 100.

In one embodiment, the image acquisition unit 320 may acquire a plurality of images by continuously photographing the surroundings of the body 110, and the acquired plurality of images may be stored in the storage unit 305.

The mobile robot 100 may increase the accuracy of obstacle recognition by using a plurality of images or may increase the accuracy of obstacle recognition by selecting one or more images from among the plurality of images to use effective data.

The input unit 325 may include an input device (e.g., a key, a touch panel, etc.) capable of receiving a user input. The input unit 325 may include a manipulation unit 137 capable of inputting various commands such as power on/off of the mobile robot 100.

The input unit 325 may receive a user input through an input device and transmit a command corresponding to the received user input to the controller 350.

The suction unit 330 may suck air containing dust. The suction unit 330 may include, for example, a suction device (not shown) for sucking foreign matter, brushes 154 and 155 for brushing, and a dust bin (not shown) for storing foreign matter collected by the suction device or the brushes (e.g., the brushes 154 and 155 of FIG. 3), a suction port (e.g., the suction port 150h of FIG. 4) through which air is sucked.

The traveling unit 360 may allow the mobile robot 100 to move. The traveling unit 360 may include, for example, at least one driving wheel 136 that allows the mobile robot 100 to move and at least one motor (not shown) that causes the driving wheel to rotate.

The sensor unit 370 may include the sensing unit 170 of the mobile robot 100a of FIG. 1 or the sensing unit 230 of the mobile robot 100b of FIG. 5, and the LiDAR sensor 175 configured to measure a distance to an object outside the body 110.

The mobile robot 100 according to an embodiment of the present disclosure may generate a map by recognizing the distance, location and direction of objects sensed by the LiDAR sensor 175.

The mobile robot 100 according to an embodiment of the present disclosure may obtain geometry information of the traveling area by analyzing a laser reception pattern such as a time difference or signal strength of the laser reflected and received from the outside. In addition, the mobile robot 100 may generate a map using the geometry information acquired through the LiDAR sensor 175.

For example, the mobile robot 100 according to the present disclosure may perform LiDAR slam to determine a movement direction by analyzing surrounding terrain information acquired at the current location through the LiDAR sensor 175.

More preferably, the mobile robot 100 according to the present disclosure may effectively recognize an obstacle through vision-based location recognition using a camera and a LiDAR-based location recognition technology using a laser and an ultrasonic sensor, and may generate a map by extracting an optimal movement direction with a small variance.

The sensor unit 370 may include an obstacle detection sensor 171 to detect an obstacle ahead, a cliff detection sensor 172 to detect the presence or absence of a cliff on the floor in the traveling area, and the like.

A plurality of obstacle detection sensors 171 may be arranged at predetermined intervals on an outer circumferential surface of the mobile robot 100. The obstacle detection sensor 171 may include an infrared sensor, an ultrasonic sensor, a radio frequency (RF) sensor, a position sensitive device (PSD) sensor, etc.

The obstacle detection sensor 171 may be a sensor that detects a distance to an indoor wall or an obstacle, and although the infrared sensor is used as an example in the following description, the present disclosure is not limited in type.

The obstacle detection sensor 171 may sense an object, particularly, an obstacle existing in a traveling (movement) direction of the mobile robot 100 and transmit obstacle information to the controller 350. That is, the obstacle detection sensor 171 may detect a movement path of the mobile robot 100, a projecting object present in front or side of the mobile robot 100, a fixture, furniture, a wall surface and a wall edge of a house, and the like, and may transmit detection information to the controller 350.

The sensor unit 370 may further include a traveling detection sensor (not shown) that detects a traveling operation of the mobile robot 100 and outputs operation information. The traveling detection sensor may include a gyro sensor, a wheel sensor, an acceleration sensor, and the like.

The gyro sensor may detect a rotation direction and a rotation angle when the mobile robot 100 moves according to an operation mode. The gyro sensor may detect an angular velocity of the mobile robot 100 to output a voltage value proportional to the angular velocity.

The wheel sensor may be connected to the driving wheel 136 (e.g., the left wheel 136 L and the right wheel 136 R of FIG. 4) to detect the number of revolutions of the driving wheel 136.

A travel distance may be measured according to the detected number of revolutions, and the current state of the mobile robot 100 may be determined based on the distance traveled per hour.

The acceleration sensor may detect a change in speed of the mobile robot 100. The acceleration sensor may be attached to a position adjacent to the driving wheel 136 or may be embedded in the controller 350.

The sensing unit may further include a bumper sensor on a lateral side of the mobile robot.

When the lateral side is pushed by an external collision, the bumper sensor converts it into an electrical signal and transmits the same to the controller 350.

The output unit 380 may include a sound output unit 381 that outputs an audio signal. Under the control of the controller 350, the sound output unit may output a notification message, such as a warning sound, an operation mode, an operation state and an error state, information corresponding to a user's command input, a processing result corresponding to the user's command input, and the like as sound.

The sound output unit 381 may convert an electrical signal from the controller 150 into an audio signal and output the same. To this end, the sound output unit 381 may include a speaker or the like.

The output unit 380 may include a display 382 that displays information corresponding to a user's command input, a processing result corresponding to the user's command input, an operation mode, an operation state, an error state, and the like as an image.

In some embodiments, the display 382 may be configured as a touch screen by forming an inter-layered structure with a touch pad. In this case, the display 382 configured as a touch screen may be used as an input device capable of inputting information by a user's touch, in addition to the output device.

The communication unit 390 may include at least one communication module (not shown), and may transmit and receive data to and from an external device. Among external devices that communicate with the mobile robot 100, an external terminal may include, for example, an application for controlling the mobile robot 100, may display a map of a traveling area to be cleaned by the mobile robot 100 through execution of the application, and may designate a specific area on the map as a restricted area where the entry of the mobile robot 100 is prohibited.

The communication unit 390 may transmit and receive signals using a wireless communication method such as Wi-Fi, Bluetooth, beacon, Zigbee, and radio frequency identification (RFID).

A power supply unit may supply driving power and operating power to each component of the mobile robot 100.

The mobile robot 100 may further include a battery detection unit (not shown) that detects a remaining battery capacity, a charging state, and the like of the battery 138 and transmits a detection result to the controller 350.

The controller 350 may be connected to each of the components provided in the mobile robot 100. For example, the controller 350 may transmit and receive signals to and from each component provided in the mobile robot 100, and may control the overall operation of each component.

Based on the information acquired through the sensor unit 370, the controller 350 may determine a state of the inside/outside of the mobile robot 100.

The controller 350 may calculate a rotation direction and a rotation angle using a voltage value output from the gyro sensor.

Based on the value output from the acceleration sensor, the controller 350 may determine a change in state of the mobile robot 100 such as starting, stopping, turning, and colliding with an obj ect.

The controller 350 may detect the occurrence of a collision based on the value output from the bumper sensor.

The controller 350 may detect a location of an obstacle based on at least two signals received through the infrared sensor, and may control movement of the mobile robot 100 according to the detected location of the obstacle.

Meanwhile, the controller 350 may calculate a rotational speed of the driving wheel 136 based on the number of resolutions output from the wheel sensor. In addition, the controller 350 may calculate a rotation angle based on a difference in the number of revolutions between the left wheel 136 L and the right wheel 136 R.

Further, the controller 350 may determine a distance traveled per hour based on the rotational speed from the wheel sensor to determine the current state of the mobile robot 100 and an abnormal situation such as a collision, wandering (off course), stalling, or the like.

As the abnormal situation of the mobile robot 100 is determined based on only the output of the wheel sensor, traveling of the mobile robot 100 may be determined based on only the value of the wheel sensor when other sensors malfunction.

Meanwhile, the controller 350 may include a travel control module 351, a map generation module 352, a location recognition module 353, and/or an obstacle recognition module 354. In this drawing, for convenience of explanation, it is illustrated that the travel control module 351, the map generation module 352, the location recognition module 353, and/or the obstacle recognition module 354 are provided separately, but the present disclosure is limited thereto.

The location recognition module 353 and the obstacle recognition module 354 may be integrated as one recognizer and configured as a single recognition module 355. In this case, the recognizer may be trained using a learning technique such as machine learning, and the trained recognizer may recognize the attribute of an area, an object, and the like by classifying data input thereafter.

In some embodiments, the map generation module 352, the location recognition module 353, and the obstacle recognition module 354 may be configured as one integrated module.

The travel control module 351 may control traveling of the mobile robot 100, and may control driving of the traveling unit 360 according to a traveling setting.

The travel control module 351 may determine a travel path or route of the mobile robot 100 based on the operation of the traveling unit 360. The travel control module 351 may recognize a current or previous movement speed of the mobile robot 100, a distance traveled by the mobile robot 100, and the like based on the rotational speed of the driving wheel 136, and the location of the mobile robot 100 on the map may be updated based on the recognized traveling information.

The map generation module 352 may generate a map for a traveling area.

The map generation module 352 may generate and/or update the map in real time based on the information obtained while the mobile robot 100 is traveling.

The map generation module 352 may set a plurality of movement directions. For example, when a function for generating a map for a traveling area (hereinafter referred to as a "map generation function") is executed, the map generation module 352 may set a direction in which the front side of the mobile robot 100 faces at a time the function is executed as a first movement direction. In addition, the map generation module 352 may set a direction in which the left side of the mobile robot 100 faces as a second movement direction, a direction in which the right side of the mobile robot 100 faces as a third movement direction, and a direction in which the rear side of the mobile robot 100 faces, which is the direction opposite to the first movement direction, as a fourth movement direction.

Meanwhile, in this drawing, although the plurality of movement directions are described as being set to four directions, the present disclosure is not limited thereto, and different number of directions, such as eight directions, sixteen directions, etc., may be set according to various embodiments.

The map generation module 352 may generate a map based on the information acquired through the LiDAR sensor 175.

The map generation module 352 may acquire geometry information of the traveling area by analyzing a reception pattern such as a reception time difference and signal strength of a laser output through the LiDAR sensor 175 and reflected and received from an external object. The geometry information of the traveling area may include, for example, the location, distance and direction of objects around the mobile robot 100.

The map generation module 352 may generate a grid map based on the geometry information of the traveling area acquired through the LiDAR sensor 175, and may store information about a plurality of nodes. Such information may be defined as first map data.

In addition, the map generation module 352 may generate a cell data-based grid map based on a distance detection signal from the infrared sensor, which is the obstacle detection sensor 171.

The map generation module 352 may divide the traveling area into a plurality of sub-areas, and may generate a grid map with different cell data for areas where obstacles are present and areas where obstacles are absent through the infrared sensor while the mobile robot 100 is traveling in each sub-area.

The location recognition module 353 may determine a location of the mobile robot 100. The location recognition module 353 may determine the location of the mobile robot 100 while the mobile robot 100 is traveling.

The location recognition module 353 may determine the location of the mobile robot 100 based on the image acquired through the image acquisition unit 320.

For example, while the mobile robot 100 is traveling, the location recognition module 353 may map features of each location of the traveling area detected from the acquired image to each location based on the map data generated by the map generation module 352, and may store, in the storage unit 305, data regarding the features of each location of the traveling area mapped to each location on the map as location recognition data.

Meanwhile, the location recognition module 353 may calculate similarity (probability) of locations by comparing the features of the traveling area detected from the acquired image with the features of each location of the traveling area included in the location recognition data stored in the storage unit 305, and may determine, based on the calculated similarity (probability) of the locations, a location with the greatest similarity as the location of the mobile robot 100.

In one embodiment, the mobile robot 100 may extract features from the image acquired through the image acquisition unit 320, and may determine a location of the mobile robot 100 by substituting the extracted features into the mapped grid map.

Meanwhile, the mobile robot 100 may determine a current position by learning the map through the travel control module 351, the map generation module 352, and/or the obstacle recognition module 354 without the location recognition module 353.

The obstacle recognition module 354 may detect an obstacle around the mobile robot 100. For example, the obstacle recognition module 354 may detect an obstacle around the mobile robot 100 based on the image acquired through the image acquisition unit 320 and/or the sensing data acquired through the sensor unit 370.

When an obstacle is detected by the obstacle recognition module 354, the obstacle recognition module 354 may determine a traveling pattern, such as going straight or turning, according to the attributes of the obstacle and then may transmit the determined traveling pattern to the travel control module 351.

The mobile robot 100 according to an embodiment of the present disclosure may recognize a human being and an object and perform avoiding based on machine learning. Here, machine learning may refer to the ability of a computer to learn from data and solve a problem through learning without explicitly being programmed.

Deep learning may refer to an artificial intelligence technology that uses artificial neural networks (ANNs) for constructing artificial intelligence to enable computers to learn in a similar way to humans, without explicit instructions. The artificial neural network (ANN) may be implemented in the form of software or in the form of hardware such as a chip.

The obstacle recognition module 354 may include an artificial neural network (ANN) in the form of software or hardware in which the attributes of an obstacle are learned. For example, the obstacle recognition module 354 may include a deep neural network (DNN) such as a convolutional neural network (CNN), a recurrent neural network (RNN), or a deep belief network (DBN) trained through deep learning.

Alternatively, the mobile robot 100 may transmit, through the communication unit 390, the original image or the extracted image acquired by the image acquisition unit 320 to a predetermined server, and may receive data regarding machine learning from the predetermined server. In this case, the mobile robot 100 may update the obstacle recognition module 354 based on the data regarding machine learning received from the predetermined server.

The mobile robot 100 may generate a highly usable map that is robust to various environmental variables, without relying on sensors.

In addition, while the mobile robot 100 performs a cleaning operation based on an existing map, a restricted area where an abnormal situation occurs may be set based on the actual traveling state of the mobile robot 100 and reflect it to the map.

By transmitting and receiving information of the restricted area where such an abnormal situation occurs to and from the user terminal 300, information of some restricted areas confirmed by a user may be reflected in the map so that the map is newly updated, and the mobile robot 100 may travel in the corresponding traveling area according to the updated map from the subsequent traveling.

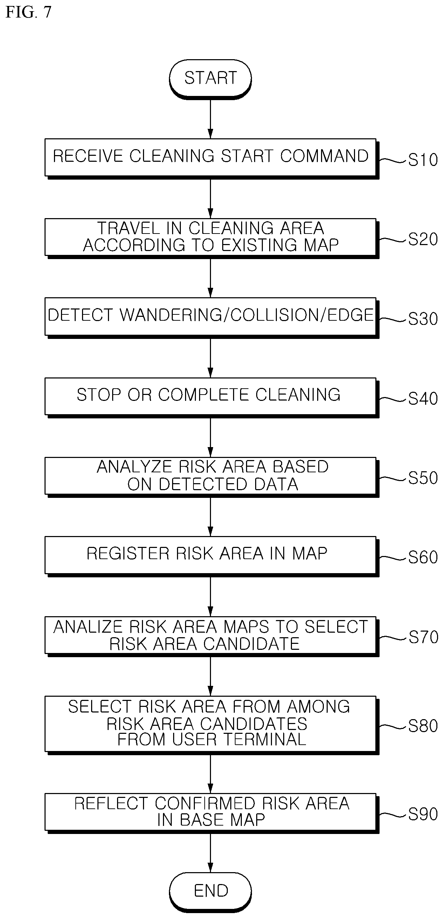

Hereinafter, a map generation operation according to the traveling state will be described with reference to FIGS. 7 to 16.

FIG. 7 is a flowchart illustrating a process for designating a restricted area of a mobile robot according to an embodiment of the present disclosure.

First, referring to FIG. 7, when the mobile robot 100 receives a cleaning start command from an external user terminal or when a cleaning start command is triggered according to a set schedule (S10), the mobile robot 100 starts traveling in a corresponding traveling (or cleaning) area (S20).

Here, the controller 350 collects traveling information while the mobile robot 100 is traveling in the traveling area according to an existing map, namely, a map for the traveling area stored in the storage unit 305 (S30).

The traveling information collects information regarding an abnormal situation that occurs during the cleaning operation according to the stored map.

Such an abnormal situation may be obtained from the bumper sensor, which is a collision detection sensor, or the sensor unit 370 other than the bumper sensor, i.e., traveling information may be collected to determine the abnormal situation.

The abnormal situation that occurs during traveling may include a collision, wandering, and stalling.

In the case of a collision, when the bumper sensor detects a collision, namely, when a collision signal is received from the bumper sensor upon colliding with a specific obstacle during traveling, it may be determined as a collision situation.

In addition, when a condition for determining normal bumping is satisfied, it may be determined as a collision situation.

In the case of wandering, it may be classified as wandering based on wheel current value and wandering based on time.

In the case of wandering based on the wheel current value, it is defined as a case in which the occurrence of a collision is not detected by the bumper sensor but is recognized by a change in the wheel current value. This may include a situation such as the mobile robot 100 moving while pushing a heavy obstacle.

In the case of wandering based on the time, it is defined as a case in which a travel distance for a predetermined time is limited.

In the case of stalling, it is defined as a case where there is no movement for a predetermined time, which includes a wheel error or stopping.

Regarding abnormal situations such as a collision, wandering, stalling, and the like, the controller 350 obtains and determines each traveling information, stores a location of the occurrence of each abnormal situation and a type of abnormal situation, and determines whether to stop or continue traveling for cleaning (S40).

When the traveling for cleaning is stopped or completed, the controller 350 analyzes a risk area (or zone) of the traveling area in the map based on the detected information (S50).

That is, the controller 350 records an area where each abnormal situation has occurred as a risk area, generates a restricted area map for this traveling, and registers the restricted area map in the storage unit 305 (S60).

Meanwhile, when a predetermined number of restricted area maps are stored, the controller 350 analyzes the plurality of stored restricted area maps together to generate restricted area candidates in the traveling area (S70).

The restricted area candidate may be determined based on the number of times an area is set as a restricted area in the restricted area map created at each time of traveling in the traveling area. In detail, different weights may be applied to different types of abnormal situations so as to set an overlapping area for a plurality of restricted area maps, and the weights of the overlapping areas may be summed to create a specific area as a restricted area candidate.

The controller 350 transmits the generated restricted area candidates to the user terminal 300 and receives selection information about one or more selected among the restricted area candidates from the user terminal 300 (S80).

The controller 350 updates a base map by reflecting the selected restricted area(s) from among the restricted area candidates in the stored base map (S90).

As such, for one traveling area, a restricted area map with a record of risk areas in which abnormal traveling has occurred is created, with respect to the base map, at each time of traveling, and a plurality of restricted area maps are analyzed together to calculate restricted area candidates.

Thus, the accumulation of data on multiple times of traveling may improve the reliability of the restricted area. In addition, as the restricted area candidate is required to be greater than or equal to a preset threshold, it is possible to greatly increase the probability of the restricted area.

Further, it is possible to create an optimal restricted area map by allowing a user to finally select a specific area from among the restricted area candidates through the user terminal 300.

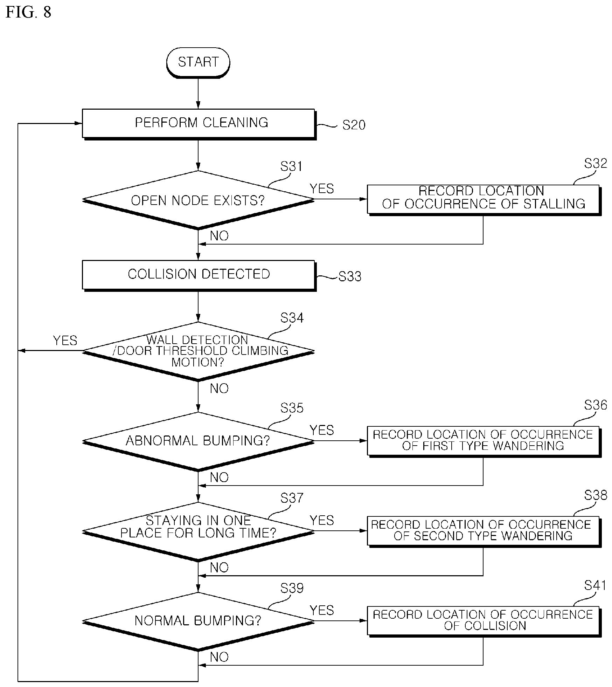

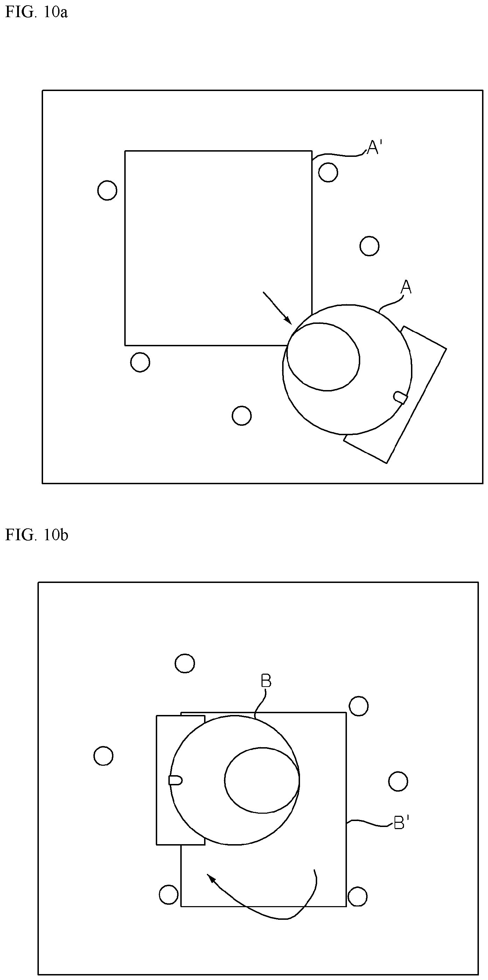

Hereinafter, a process of determining each abnormal traveling will be described in detail with reference to FIGS. 8 and 10.

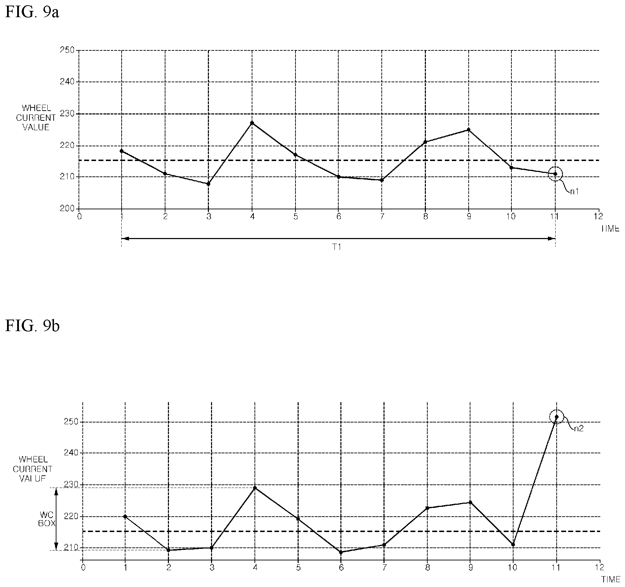

FIG. 8 is a flowchart illustrating a process for detecting an abnormal situation of FIG. 7, FIGS. 9A and 9B illustrate an example of determining wandering of the mobile robot 100 according to the flowchart of FIG. 8, and FIGS. 10A and 10B illustrate another example of determining wandering of the mobile robot 100 according to the flowchart of FIG. 8.

Referring to FIG. 8, the controller 350 periodically receives traveling information and analyzes the traveling information to determine whether an abnormal situation occurs.

First, while the mobile robot 100 performs cleaning, the controller 350 receives sensing or detection information from the wheel sensor to determine whether a wheel error or stalling has occurred (S20).

For example, when the wheel does not operate for a predetermined time based on the information periodically received from the wheel sensor, or when the mobile robot 100 does not move while the wheel is rotating, the controller 350 determines it as stalling (S31).

When it is determined as stalling, the controller 350 controls the mobile robot 100 to stop traveling and registers a corresponding location as a restricted area in the restricted area map (S32).

If there is no stalling situation, the controller 350 periodically determines whether a collision occurs while continuing traveling (S33).

When one of various types of collision conditions is met, it is determined that a collision has occurred.

Such collision conditions may include various collision conditions, such as the bumper sensor sensing a collision, a detection signal from the sensor unit such as wall detection or a door threshold climbing motion, or a change in wheel current value.

For example, the controller 350 may determine whether a collision occurs by tracking a change in feature points of the image through SLAM from the surrounding environment image obtained from the image acquisition unit.

As another example, the controller 350 may determine that a collision has occurred when an acceleration error signal is received from the acceleration sensor.

When one of the various collision conditions is met, the controller 350 determines that a collision has occurred, and determines whether the collision situation corresponds to wall detection or a door threshold climbing motion (S34).

Based on data analysis of the collision situation, when the current collision corresponds to colliding with a wall or a motion of door threshold climbing, the controller 350 performs an avoidance motion to pass the corresponding obstacle and resumes traveling in the traveling area.

In other words, when a wall is detected ahead and the mobile robot 100 temporarily deviates from a predetermined traveling path to avoid the wall, this may be recognized as a collision motion corresponding to the detected situation. Accordingly, information regarding the wall detection motion includes information about the number of wheel rotations, the direction of wheel rotation, the number of times of turning, etc.

Meanwhile, when the collision situation is not the case of wall detection/ door threshold climbing motion, the controller 350 determines whether the collision situation is abnormal bumping (S35).

Whether or not it is abnormal bumping may be determined by the wheel current value from the wheel sensor, as shown in FIGS. 9A and 9B.

The controller 350 periodically receives wheel a current value from the wheel sensor to determine abnormal bumping based on the received wheel current value.

That is, in the case of FIG. 9A, wheel current values during a first period of time T1 are distributed with a deviation of within ±15 from the mean value. If the current value at a current time nl is a first value, it is determined that this is a normal situation and abnormal bumping has not occurred.

Here, as shown in FIG. 9B, when wheel current values during a first period of time T1 are within a box with a deviation of within ±15 from the mean value, if the current value at a current time n2 is a second value, namely, if it is out of the box, it is determined that this is an abnormal situation and abnormal bumping has occurred.

Even though a collision is not detected by the bumper sensor, when the wheel current is excessively high, which is because a difficulty in turning causes an increase in the current value, it is determined as an abnormal situation corresponding to wandering, i.e., the mobile robot 100 moving while pushing a heavy obstacle.

Accordingly, when the collision situation is determined as abnormal bumping, the controller 350 registers a corresponding location as a first type of wandering in the restricted area map (S36).

By contrast, when the collision situation is not determined as abnormal bumping, the controller 350 determines whether the mobile robot 100 stays in one place for a long time (S37).

In other words, the controller 350 determines whether a travel distance during a reference time is less than or equal to a threshold value to determine it as a second type of wandering (S38).

In a normal situation where no wandering occurs, as shown in FIG. 10A, the mobile robot 100 travels a distance greater than the threshold value during the reference time.

Here, the reference time may be set to 15 seconds or less, preferably 12 seconds, and the threshold value may be set to 50 cm, preferably 30 cm, which is set as the case of wandering for more than two turns.

However, as shown in FIG. 10B, when wandering occurs, the mobile robot 100 moves a distance less than or equal to the threshold value during the same reference time, it is determined that the mobile robot 100 loses its way in a complex terrain or is stuck in a particular place.

The controller 350 determines it as the second type of wandering, which is wandering based on time, and registers the location as a wandering occurred area in the restricted area map.

Meanwhile, the controller 350 also determines whether normal bumping occurs during a period of time (S39).

Normal bumping refers to a collision caused by collision detection by the wheel sensor, the image acquisition unit, and a tilt sensor according to a set algorithm, in addition to a wall, a door threshold, and abnormal bumping, or a physical collision detection by the bumper sensor.

When the normal bumping has occurred, the controller 350 registers a corresponding location as a collision occurred area in the restricted area map (S41).

According to the flowchart of FIG. 8, when a collision occurs from detection signals of the respective sensors of the sensor unit 370, it is possible to sequentially determine, based on the corresponding signals, whether the collision is wall detection/door threshold climbing motion, abnormal bumping, wandering based on time, and normal bumping. However, alternatively, it is possible to simultaneously determine whether the collision is wall detection/door threshold climbing motion, abnormal bumping, wandering based on time, or normal bumping.

In other words, when it corresponds to a specific abnormal situation, its location is registered.

By analyzing detection signals generated at each period of time, the mobile robot 100 may record all the various abnormal situations occurring at a specific location by type.

As such, the mobile robot 100 may create a restricted area map that periodically records abnormal situations occurring while traveling in one traveling area according to the base map, and when all risk areas for the traveling area are recorded upon completion of each traveling in the traveling area, the restricted area map is analyzed to perform a risk area analysis to extract restricted areas on an area basis.

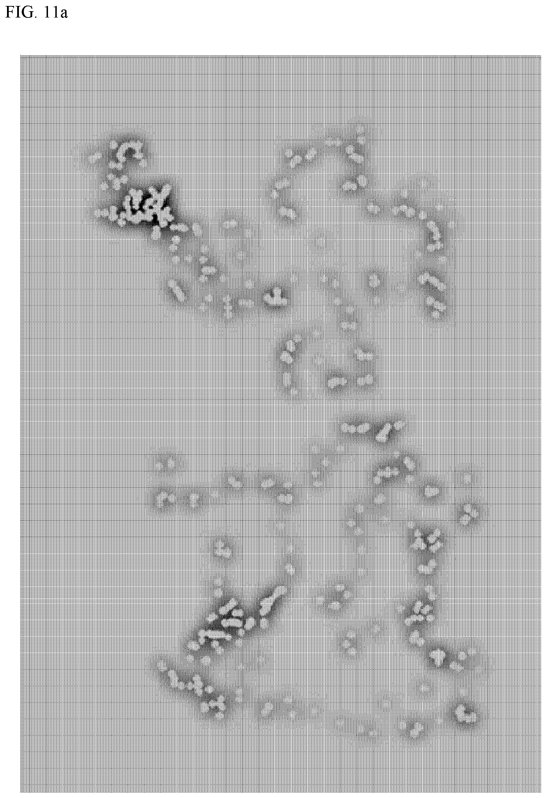

FIG. 11A illustrates that locations of the occurrence of abnormal situations are recorded as points on a base map.

The controller 350 performs a density-based spatial clustering of applications with noise (DBSCAN) algorithm for each point of FIG. 11A based on its location.

In other words, an area where a predetermined number of points are located within a specific distance is grouped and set as one risk area.

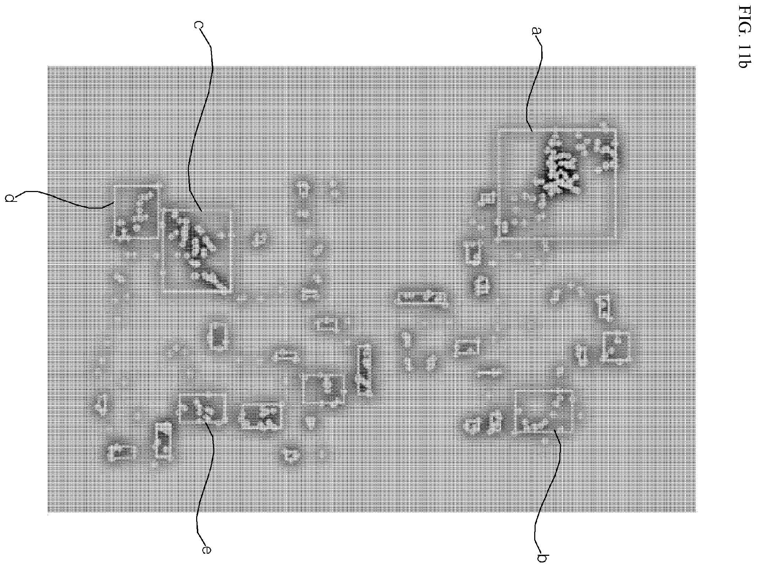

According to this grouping, a plurality of groups are formed as shown in FIG. 11B, and the area in which the group is formed is set as a risk area for this traveling.

In FIG. 11B, five areas a, b, c, d, and e may be set as risk areas, and points in following areas are determined as noise, whose density is less than or equal to a threshold value, and therefore are discarded.

In FIGS. 11A and 11B, the density of a predetermined area may be used for determination but, alternatively, clustering using point clustering is also available.

When the risk areas are set, the base map on which the risk areas are set is defined as a restricted area map for corresponding traveling.

The restricted area map of the corresponding traveling area for traveling is stored and registered in the storage unit 305 for each traveling.

Meanwhile, when the stored restricted area maps are accumulated more than a predetermined number of times, the controller 350 may analyze a plurality of restricted area maps of the predetermined number of times together to extract restricted area candidates and update the base map by reflecting a specific restricted area among the restricted area candidates.

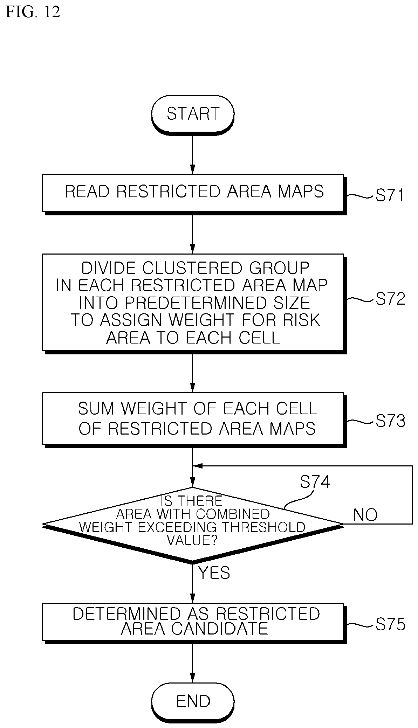

Hereinafter, a base map update operation of the mobile robot 100 will be described with reference to FIGS. 12 to 16.

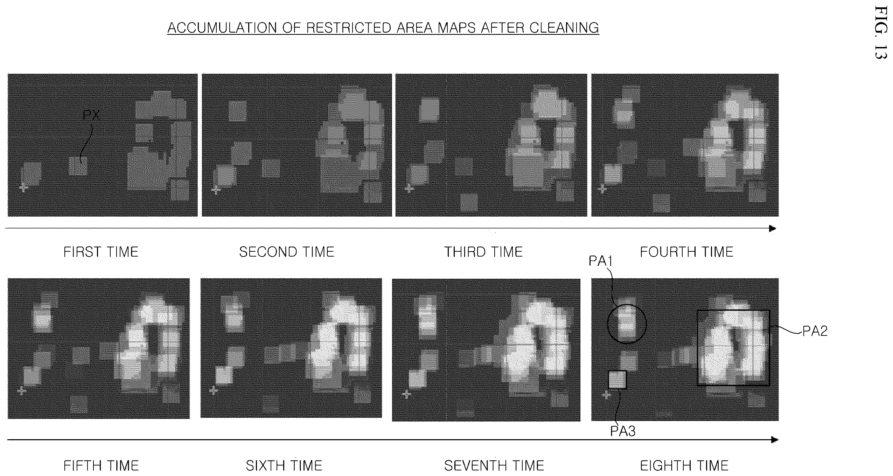

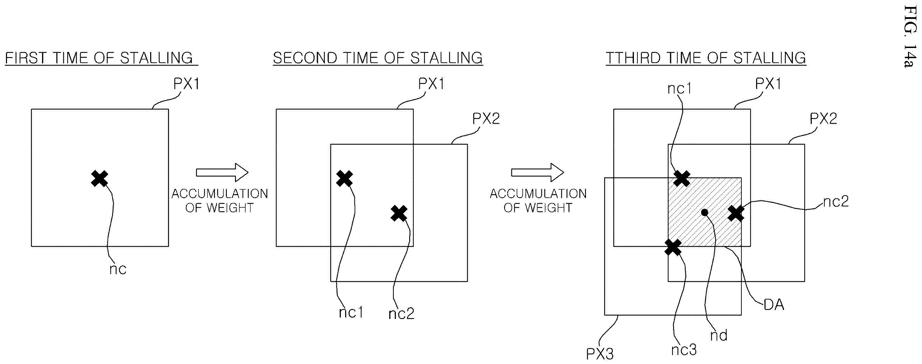

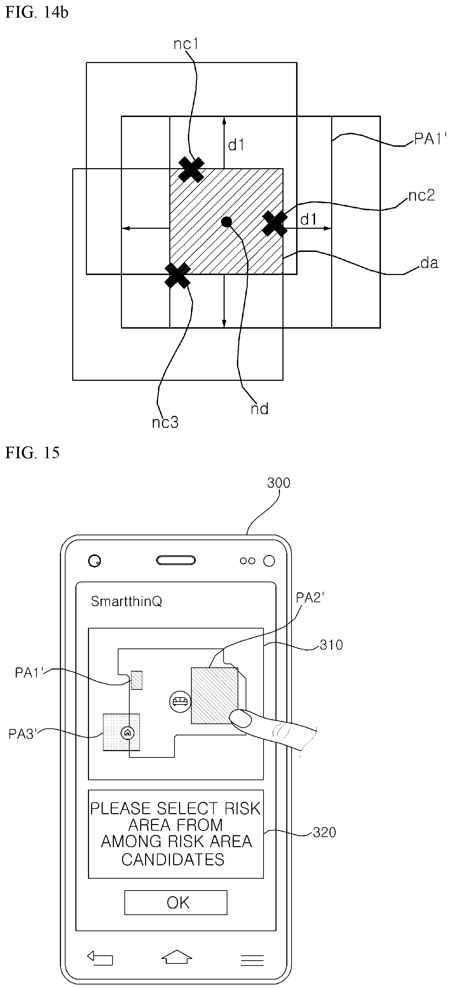

FIG. 12 a process of selecting a restricted area candidate of FIG. 7, FIG. 13 illustrates the accumulation of restricted areas of FIG. 12, and FIGS. 14A and 14B are detailed views illustrating a process of determining the size of a restricted area candidate.

Referring to FIG. 12, when a predetermined number of restricted area maps for the corresponding traveling area is stored in the storage unit 305, the controller 350 of the mobile robot 100 performs a restricted area map analysis to reflect the restricted area in the base map.

Specifically, a plurality of restricted area maps are read from the storage unit 305 (S71).

Here, the restricted area map analysis may be performed when a predetermined number of restricted area maps are stored, for example, eight restricted area maps, but the number of restricted area maps is not limited thereto.

The controller 350 simultaneously reads n stored restricted area maps and, for the clustered risk area recorded in each restricted area map, sets a cell PX1 of a predetermined size for each location point nc of the corresponding risk area.

As shown in FIG. 14A, each cell PX1 may be set to a predetermined size in width and length, with the corresponding location point nc as its center, for example, twice the diameter of the mobile robot 100 or 50 to 60 cm.

A square cell PX1 centered on the location point is set, and a weight is assigned to each cell PX1 (S72).

Here, the weight may be set differently depending on the type of abnormal situation.

For example, the weight may be set to +20 for stalling, +12 for a collision and wandering, and -2 for other cases.

In this manner, a weight is assigned to each cell according to the type of abnormal situation of the corresponding location point, and the controller 350 assigns the weight to all cells in each restricted area map.

Next, the controller 350 sums the weight of each cell by overlapping all of the restricted area maps, as shown in FIG. 13.

The summation of the weights may be obtained by physically overlapping eight restricted area maps, as shown in FIG. 13. Here, the summation of the weight of each cell and an overlapping area may be set (S73), as shown in FIG. 14.

As illustrated in FIG. 14, a first cell PX1 for one location point nc is set in a first restricted area map, and there may be other cells partially overlapping the first cell X1 in the following restricted area maps.

For example, as shown in FIGS. 14A to 14C, when a partial overlap with the first cell PX1 occurs in three cells PX1, PX2, and PX3 in the eight restricted area maps, an overlap area DA of each cell PX1, PX2, PX3 is set as shown in FIG. 14C. The overlap area DA is defined as an area to which all of the plurality of cells PX1, PX2, and PX3 partially overlapping each other belong. When the overlap area DA is defined as shown in FIG. 14C, an overlap point nd is set at a center of the overlap area DA.

An area extended or increased by a predetermined size with respect to the overlap point nd is defined as a correction overlap area PA1'. Here, the predetermined size may be the same as the size of the initial cell. Alternatively, it may extend outward from each side of the overlap area DA by a predetermined size. Here, the predetermined size may be, but is not limited to, 20 to 30 cm, and may be set to be inversely proportional to the size of the overlap area DA.

When the correction overlap area PA1' is determined in this manner, the weights of the respective cells PX1, PX2, and PX3 overlapping in the correction overlap area PA1' are added up and recorded together.

For example, in the eight restricted area maps, when the correction overlap area PA1' is formed by the overlap of three cells PX1, PX2, and PX3, the weight of each cell PX1, PX2, PX3 is summed, such that for three times of stalling, a total combined weight of 60 may be set for the correction overlap area PA1'.

The more the cells PX in the restricted area are overlapped, the brighter the color becomes, as shown in FIG. 13, allowing the location of the occurrence of an abnormal situation to be visually recognizable.

Next, the controller 350 derives an area where the summed weight for each correction overlap area PA1' is greater than or equal to a threshold value (S74).

In this case, the controller 350 may set the threshold value to be the same for all correction overlap areas PA1', for example, the threshold value may be set to 60. According to the setting, the number of duplicates that meet more than the threshold value for an abnormal situation may be set differently.

For example, a stalling situation has an assigned weight of 20, and therefore, it should have three or more overlaps to be equal to or greater than the threshold value, and wandering and a collision have an assigned weight of 12, and therefore, it should have five or more overlaps to be equal to or greater than the threshold value.

The controller 350 selects the correction overlap area PA1' that satisfies the threshold value or more as a restricted area candidate (S75).

Thus, for the plurality of restricted area maps, only areas where abnormal situations overlap to have a weight greater than the threshold value may be selected as restricted area candidates.

As such, instead of selecting a restricted area based on one-time traveling, it is determined by multiple times of traveling in the same area, generating a restricted area map for each traveling, recording each abnormal situation, and overlapping the traveling records for multiple times of traveling, thereby improving the reliability.

In this manner, when restricted area candidates are selected for the plurality of restricted area maps, the controller 350 of the mobile robot 100 may communicate with the user terminal 300, instead of immediately reflecting them in the base map.

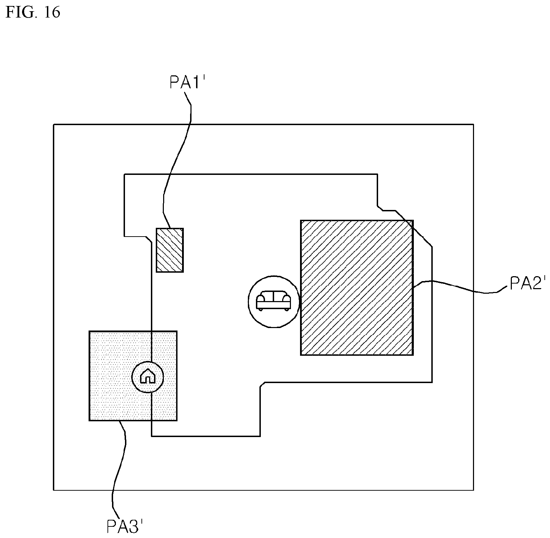

FIG. 15 illustrates a restricted area setting from the user terminal 300 of FIG. 7, and FIG. 16 illustrates setting a confirmed restricted area on a map.

In detail, as described in FIG. 7, the controller 350 transmits information regarding the corresponding area candidates to the user terminal 300.

As shown in FIG. 15, the user terminal 300 may install and execute an application used for the control of the mobile robot 100 to allow a user to check control and traveling information of the mobile robot 100.

In this case, the controller 350 of the mobile robot 100 may transmit information regarding the restricted area candidates to the user terminal 300 through the application in the user terminal 300.

When the application is executed, information regarding the restricted area candidates may be displayed as a plurality of areas on a map 310 for the traveling area.

Meanwhile, the user terminal 300 may output, below the map 310 for the traveling area, a text or voice that can guide a user to set a restricted area.

In one example, a text 320, "Please select restricted area from among restricted area candidates" may be displayed.

Among the plurality of restricted area candidates on the map of the application, the user may select only the restricted area in which the mobile robot 100 will not travel from next time in light of the actual traveling area condition.

Here, the user's selection can be made by touching the corresponding restricted area candidate on the map.

The controller 350 may receive selection information from the user terminal 300, and may reflect it in the base map recorded in the storage unit 305, as shown in FIG. 16.

As illustrated in FIG. 16, of the plurality of restricted area candidates, only the restricted area candidates selected according to the selection information transmitted by the user terminal 300 are reflected in the base map as confirmed restricted areas PA1' and PA2' to update the base map.

The update of the base map may allow the restricted areas PA1' and PA2' to be blocked and displayed as obstacles, and the mobile robot 100 may travel in the traveling area according to the updated base map.

In other words, by traveling according to the updated base map from the next time the mobile robot 100 travels in the traveling area, the mobile robot 100 may recognize the blocked restricted area as an obstacle to perform a response motion.

The response motion for the restricted area may be the same as the response motion for other obstacles, and in particular, may be the same as the response motion for an impassable obstacle.

Accordingly, as the mobile robot 100 travels by avoiding the restricted area, it is possible to travel in the traveling area by rotating, moving backward, changing a direction, or the like.

The aforementioned mobile robot 100 is not limited to the configurations and the methods of the embodiments described above, but all or some of the embodiments may be selectively combined so that various modifications can be made.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous.

Meanwhile, the method for controlling the mobile robot 100 according to the present disclosure can be implemented as a processor-readable code in a processor-readable recording medium provided in a network device. The processor-readable medium may include all kinds of recording devices capable of storing data readable by a processor. In addition, the processor-readable medium may be implemented as a carrier wave, such as data transmission over the Internet. The processor-readable recording medium can be distributed over a plurality of computer systems connected to a network so that processor-readable code is written thereto and executed therefrom in a decentralized manner.

Although the preferred exemplary embodiments of the present disclosure have been disclosed for illustrative purposes, those skilled in the art will appreciate that various modifications, additions and substitutions are possible, without departing from the scope and spirit of the disclosure as disclosed in the accompanying claims. Accordingly, such modifications, additions and substitutions should also be understood to fall within the scope of the present disclosure.

### [Description of reference numerals]

Mobile robot: 100 User terminal: 300
Body: 110
Storage unit: 305
Image acquisition unit: 320
Input unit: 325
Suction unit: 330
Controller: 350
Traveling unit: 360
Sensor unit: 370

## Claims

1. A mobile robot comprising:
a traveling unit to allow a body to move in a traveling area; and
a controller configured to:
analyze traveling state information while traveling in the traveling area according to a base map for the traveling area to set a risk area where a plurality of abnormal situations occur; and
update the base map by reflecting the risk area in the base map to be used for subsequent traveling in the traveling area.

2. The mobile robot of claim 1, wherein the controller is configured to create a restricted area map, where the risk area for the traveling area is set, at each of a plurality of times of traveling in the traveling area.

3. The mobile robot of claim 2, wherein, by analyzing the traveling state information, the controller is configured to determine whether the abnormal situation corresponds to one of stalling, wandering, or a collision to record a location of the risk area and a type of the abnormal situation in the restricted area map.

4. The mobile robot of claim 3, wherein the traveling unit includes a plurality of wheels to allow the body to move, and wherein the abnormal situation is determined based on the traveling state information on the wheels.

5. The mobile robot of claim 4, wherein, in case that the wheel is in an error state or the mobile robot does not travel for a predetermined time, the controller is configured to determine the abnormal situation as stalling.

6. The mobile robot of claim 5, wherein, in case that a distance traveled by the mobile robot for a predetermined time is less than or equal to a predetermined distance or a rotation current value of the wheel is out of a threshold range, the controller is configured to determine the abnormal situation as wandering.

7. The mobile robot of claim 6, further comprising a bumper sensor,
wherein the controller is configured to determine whether a collision occurs based on a signal detected by the bumper sensor.

8. The mobile robot of claim 7, wherein, by overlapping all of the restricted area maps for the traveling area, the controller is configured to select at least one of overlapping risk areas as a restricted area candidate.

9. The mobile robot of claim 8, wherein the controller is configured to:
assign a weight to each risk area; and
sum the weights of the risk area overlapping with respect to the restricted area candidate.

10. The mobile robot of claim 9, wherein, in case that the total combined weight of the risk area is greater than or equal to a threshold value, the controller is configured to select the risk area as the restricted area candidate.

11. The mobile robot of claim 10, further comprising a storage unit to store the restricted area map.

12. The mobile robot of claim 11, wherein, in case that the number of restricted area maps stored in the storage unit satisfies a predetermined number, the controller is configured to calculate the restricted area map candidate by overlapping the predetermined number of restricted area maps.

13. The mobile robot of claim 12, wherein the controller is configured to assign a different weight to each of the abnormal situations.

14. The mobile robot of claim 12, wherein the controller is configured to:
transmit information regarding the restricted area candidates to an external device; and
update the base map by recording a selected restricted area candidate from among the restricted area candidates as a restricted area in the base map.

15. The mobile robot of claim 11, wherein the controller is configured to:
display the risk area as a cell of a predetermined size with respect to a location point where the abnormal situation has occurred; and
define an area where the risk areas overlap in a plurality of restricted area maps as the restricted area candidate.

16. The mobile robot of claim 15, wherein the overlap area is extended to a predetermined size to be set as the restricted area candidate.

17. A method for controlling a mobile robot, the method comprising:
collecting traveling state information while traveling in a traveling area according to a base map for the traveling area;
determining, based on analyzing the traveling state information, a location where a plurality of abnormal situations occur as a risk area to create a restricted area map for the traveling area;
when the restricted area map is created to satisfy a predetermined number, calculating restricted area candidates by overlapping the predetermined number of restricted area maps; and
reflecting, in the based map, at least one of the restricted area candidates as a restricted area and updating the base map to be used for subsequent traveling in the traveling area.

18. The mobile robot of claim 17, wherein the calculating restricted area candidates comprises:
assigning a weight to each risk area for each restricted area map and summing the weights of the risk area overlapping with respect to the restricted area candidate; and
based on the total combined weight of the risk area being greater than or equal to a threshold value, selecting the risk area as the restricted area candidate.

19. The mobile robot of claim 18, wherein a different weight is assigned to each of the abnormal situations.

20. The mobile robot of claim 19, further comprising:
transmitting information regarding the restricted area candidates to an external device; and
receiving selection information of at least one of the restricted area candidates from the external device,
wherein the updating the base map comprises updating the base map by recording, in the base map, a selected restricted area candidate as the restricted area.
